# EUROPEAN PATENT APPLICATION

(11) **EP 3 984 929 A1**
(43) Date of publication of application: **20.04.2022**
(21) Application number: 21075013.9
(22) Date of filing: 12.10.2021
(51) Int. Cl.: B65G 69/28

(54) **LOADING RAMP**

(30) Priority: 14.10.2020 NL 1043820
(71) Applicant: Hörmann Alkmaar BV, 1822 BB Alkmaar (NL)
(72) Inventor: Stroet, Frank, 1704 WL Heerhugowaard (NL); Schut, Nicolaas Johan, 1834 KP Sint Pancras (NL)
(74) Representative: Koomen, M.J.I.

(57) **Abstract**

Loading ramp (1) for loading platforms, formed by a frame (2) with a bridge plate (3) with a supporting plate (6) that can be retracted and extended, comprising a lip (11) and two lip segments (13) on both sides of the lip, whereby the lip and the lip segments can be positioned in a first position, in which the front edge (12) of the middle lip and the front edges of the lip segments find themselves at a same distance relative to the front side of the bridge plate, and in a second position, in which the front edge of the middle lip finds itself at a distance from the front side of the bridge plate that is greater than the distance at which the front edges of the lip segments find themselves from the front side of the bridge plate, with means by which the size of the difference of the distances existing in the second position is adjustable.

## Description

The present invention relates to a loading ramp for loading platforms, formed by a frame with a bridge plate which at its loading platform side rotatably is connected to the loading platform and at its front side is provided with a retractable and extendable supporting plate, which is intended to rest upon the loading floor of a vehicle, which supporting plate is formed by a lip with a front edge and two lip segments on both sides of the lip with each also a front edge, whereby the lip and the lip segments can be positioned, when the supporting plate is extended, in a first position, in which the front edge of the lip and the front edges of the lip segments find themselves at substantially a same distance relative to the front side of the bridge plate, and can be positioned in a second position, in which the front edge of the lip finds itself at a distance from the front side of the bridge plate that is greater than the distance at which the front edges of the lip segments find themselves from the front side of the bridge plate.

Such a loading ramp is known.

When loading and unloading of vehicles one encounters heavier trucks, but also lighter and smaller delivery vans. The loading space of a truck generally is broader than the loading space of a delivery van. When loading and unloading a truck one applies a positioning of the lip and the lip segments in the first position, that is to say, the lip and the lip segments are lowered together with their front edges onto the loading floor of the truck. However, with smaller delivery vans the width of the loading space does not allow that the supporting plate along the full width thereof, that is to say the width of the lip with at both sides the lip segments, is lowered onto the loading floor.

In this situation a positioning of the lip and the lip segments in the second position is applied, in which the front edge of the middle lip finds itself at a distance from the front side of the bridge plate that is greater than the distance at which the front edges of the lip segments find themselves from the front side of the bridge plate.

In this way it is possible to lower merely the lip onto the loading floor of the delivery van, as the lip segments do not prevent this.

This does however mean that the path, on which the loading and unloading from out of the delivery vehicle onto the loading platform has to take place, is narrower. On both sides of the lip there is an empty space along which a loading and unloading vehicle being driven to and fro can topple down.

It is therefore known to provide a loading ramp with means by which the size of the difference in distances existing in the second position can be adjusted. In this way, depending on the vehicle that is to be loaded and unloaded, the lip segments can be positioned in such a way that the front edges thereof find themselves at a larger or smaller distance from the front side of the bridge plate, and whereby the distance is chosen such that the front edges of the lip segments connect to the back of the body of the vehicle being parked in front of the loading dock.

The known provision however is rather complicated and cost increasing.

It is an object of the invention to obviate this drawback of the known loading ramp and to provide a constructively simple and nevertheless functional provision by means of which the size of the difference in distances existing in the second position is adjustable.

The loading ramp according to the invention to that end is characterized in that the means, by which the size of the difference of distances existing in the second position is adjustable in a simple manner, are formed by a linear actuator that on the one side is provided onto the frame, the bridge plate or the lip, and on the other side is provided onto the lip segments or onto a part mounted onto the lip segments, and which is provided with an adjustable length of stroke.

According to a further characteristic of the loading ramp according to the invention the means are formed by an hydraulic cylinder, the housing of which is mounted onto the lip, and the cylinder rod of which is provided onto the lip segments or onto a part mounted onto the lip segments, whereby the cylinder rod is provided with a part by means of which the length of stroke can be adjusted.

According to another characteristic of the loading ramp according to the invention the means are formed by an hydraulic cylinder, the housing of which is mounted onto the lip segments or onto a part mounted onto the lip segments and the cylinder rod of which is provided onto the lip, whereby the cylinder rod is provided with a part by means of which the length of stroke can be adjusted.

According to another characteristic of the loading ramp according to the invention the part is formed by an adjusting ring provided onto the cylinder rod.

Further characteristics and features of the loading ramp according to the invention will be described with reference to the drawings of an example of an embodiment.

Figure 1 shows a perspective view, taken apart, of an example of an embodiment of the loading ramp according to the invention.

The figures 2a, 2b and 2c show a schematic top view of an example of an embodiment of the loading ramp according to the invention.

The figures 3a, 3b and 3c show a schematic bottom view of an example of an embodiment of the loading ramp according to the invention.

Figure 4 shows in perspective a detail of the example of an embodiment shown in figure 1.

The figures 5a, 5b and 5c show a schematic bottom view of a further example of an embodiment of the loading ramp according to the invention.

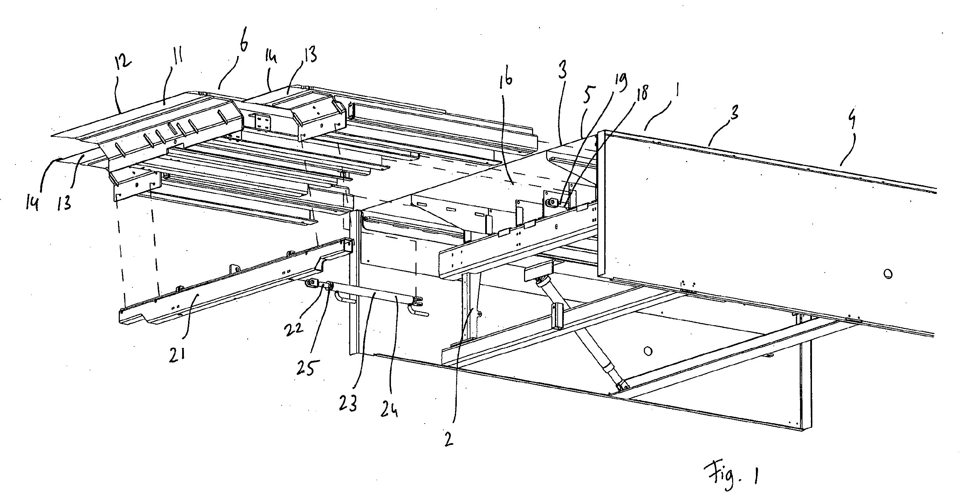

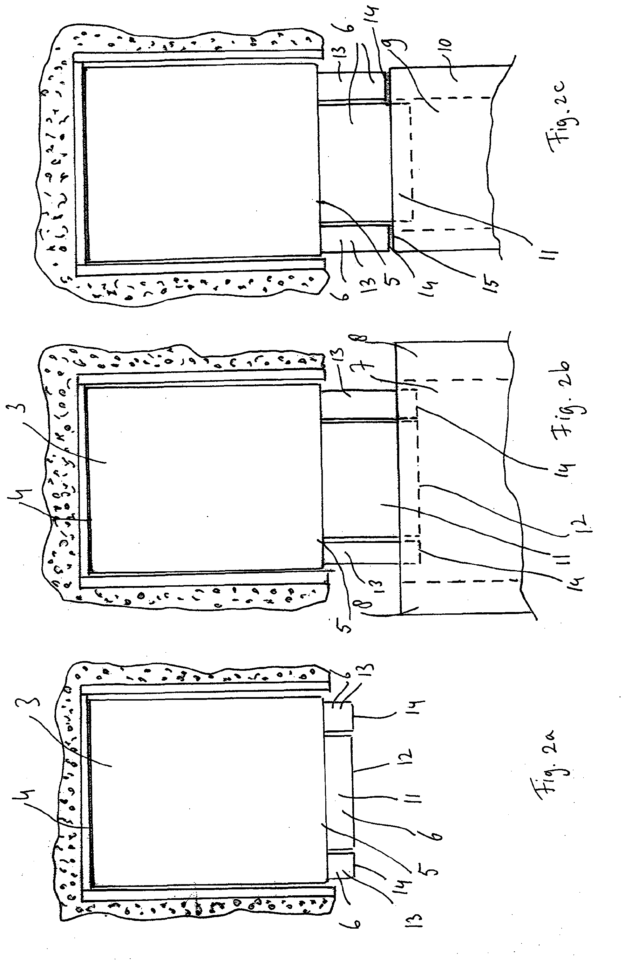

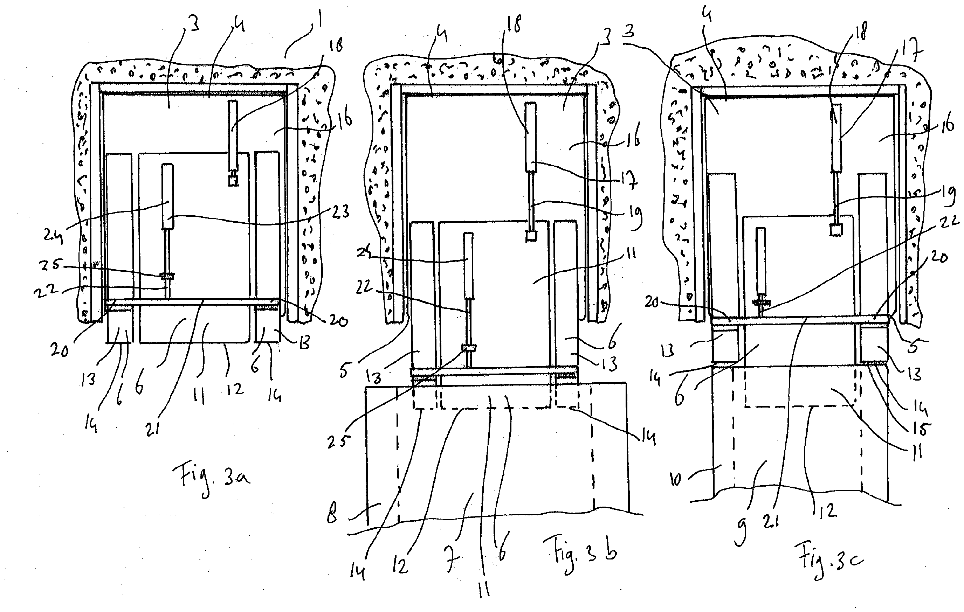

As can be seen in the figures 1, 2 and 3 the loading ramp 1 for a loading platform comprises a frame 2 with a bridge plate 3 which at its loading platform side 4 is rotatably connected to the loading platform and at its front side 5 is provided with a retractable and extendable supporting plate 6. The supporting plate 6 is intended to rest upon the loading floor 7 of a vehicle 8 (indicated with dotted line in the figures 2b and 3b), or upon the loading floor 9 of a smaller or narrower delivery van 10 (indicated with dotted line in the figures 2c and 3c).

In the figures 2a, 3a and 5a the supporting plate 6, for a good understanding of the invention, is shown already pulled out to some extent. When the loading ramp is not in operation, the supporting plate 6 is more or less stored within the bridge plate 3 and from there does not protrude to the front.

As can be seen in the figures 1, 2 and 3 the supporting plate 6 is formed by a middle lip 11 with a front edge 12 and two lip segments 13 on both sides of this lip with each also a front edge 14. The lip 11 and the lip segments 13 can be positioned, from a rest position shown in the figures 2a and 3a, in to a first position, shown in the figures 2b and 3b, in which the front edge 12 of the lip 11 and the front edges 14 of the lip segments 13 find themselves at a substantially same distance relative to the front side 5 of the bridge plate 3. Seen from the left to the right in the figures 2b and 3b the front edge 14, the front edge 12 and the front edge 14 run in a more less straight line.

In this position the lip and the lip segments all rest on the loading floor 7 of the truck 8.

The lip 8 and the lip segments 13 further can be positioned in a second position, shown in the figures 1, 2c and 3c, in in which the front edge 12 of the lip 11 finds itself at a distance from the front side 5 of the bridge plate 3 that is greater than the distance at which the front edges 14 of the lip segments 13 find themselves from the front side 5 of the bridge plate 3.

In this position only the lip 11 rests upon the loading floor 9 of the delivery van 10. It can be seen that the lip segments 13 are extended relative to the lip 11 less far from the front side 5 and connect with their front edges 14 to the back of the body 15 of the delivery van being parked in front of the loading ramp.

The retracting and extending of the lip and lip segments can be realized in various ways, for instance by making use of one or more linear actuators. In this way, for the sliding in and sliding out of the lip segments relative to the lip use can be made of an actuator that on the one side is mounted onto the frame 2, the bridge plate 3 or the lip 11 and on the other side is mounted onto the lip segments 13 or onto a part mounted onto the lip segments.

In the example of an embodiment shown in the drawings, as can more in particular be seen in the bottom view of the figures 1, the figures 3a, 3b and 3c and figure 4, at the bottom side 16 of the bridge plate 3 the housing 17 of an hydraulic cylinder 18 is mounted, the cylinder rod 19 of which is provided onto the lip 11. By means of this lip cylinder 18 the sliding in and sliding out of the lip 11 from out of the front side 5 of the bridge plate 3 takes place, as can be seen in the figures 3b and 3c. In the example of an embodiment shown the lip segments 13 are mounted to the outer ends 20 of a beam 21 extending underneath the lip 11. To this beam is mounted the cylinder rod 22 of a further hydraulic cylinder 23. The housing 24 of this lip segments cylinder 23 is mounted to the bottom side of the lip 11.

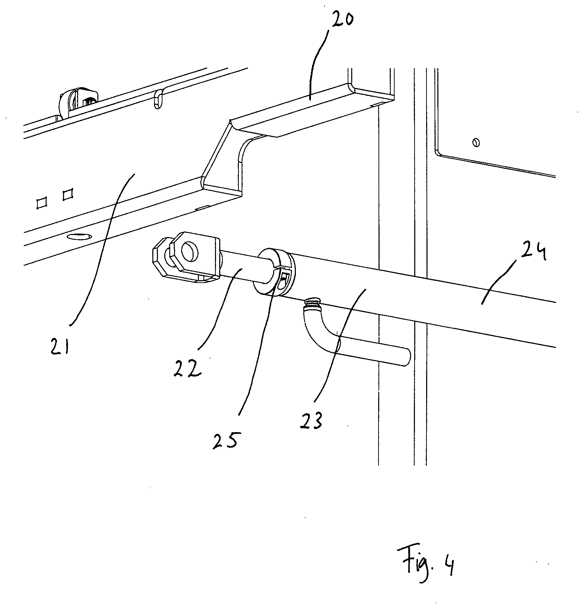

In the figures, see also figure 4, it can be seen that onto the cylinder rod 22 of the cylinder 23 an adjusting ring 25 is provided. This adjusting ring 25 is clamped onto the cylinder rod and can be moved.

In operation the lip segments cylinder 23 is in principle completely extended (figures 2b and 3b) and the lip segments 13 with the lip 11 come forward from out of the front side 5 of the bridge plate in the direction of the vehicle that is to be loaded and unloaded, the moment the lip cylinder 18 is operated.

With the operating of the lip segments cylinder 23 this will retract and pull the beam 21 backwards, in the direction of the loading platform. This takes place until the adjusting ring 25 blocks a further retracting of the cylinder rod 22 (figure 3c). The lip segments mounted to the beam 21 go along with this movement.

The size of the difference of the distances existing in the second position, in which the front edge 12 of the lip 11 finds itself from the front side 5 of the bridge plate 3 and that in which the front edges 14 of the lip segments 13 find themselves from the front side 5 of the bridge plate 3, can be adjusted in a simple manner, for instance by hand, by moving of the adjusting ring 25 on the cylinder rod 22.

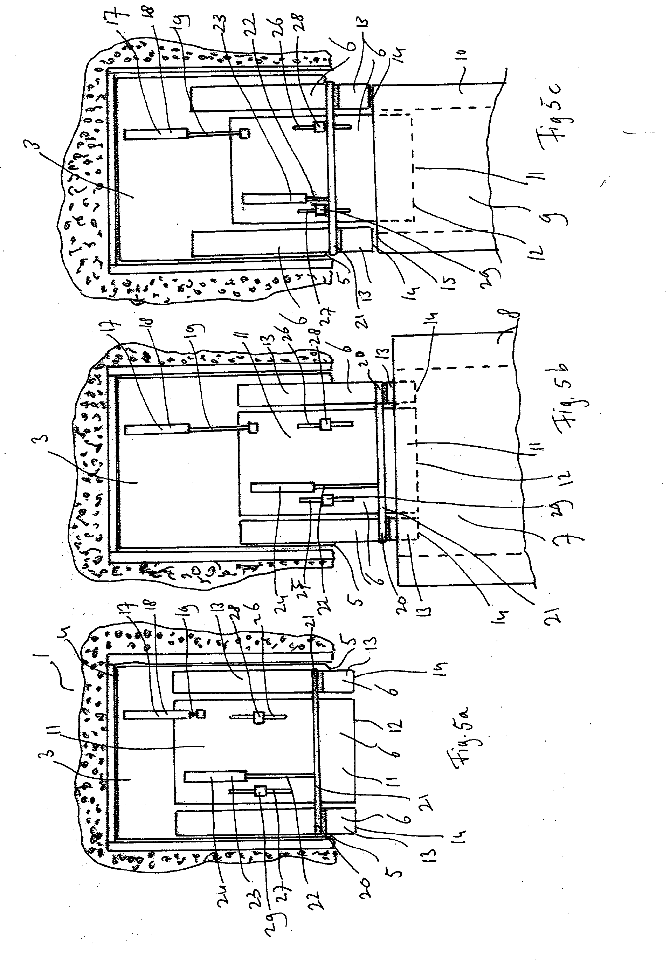

The figures 5a, 5b and 5c show a schematic bottom view of another example of an embodiment of the loading ramp according to the invention.

In the example of an embodiment shown in these drawings also onto the bottom side 16 of the bridge plate 3 a linear actuator, in this example the hydraulic cylinder 18, is provided. By means of this lip cylinder 18 the retracting and extending of the lip 11 from out of the front side 5 of the bridge plate 3 takes place, as can be seen in the figures 5b and 5c.

Here also the lip segments 13 are mounted to the outer ends 20 of a beam 21 extending underneath the lip 11. To this beam is mounted the cylinder rod 22 of a further hydraulic cylinder 23, the housing 24 of which is mounted to the bottom side of the lip 11. Also here, instead of a cylinder, some other form of linear actuator can be applied.

In operation the lip segments cylinder 23 is in principle completely extended (figure 5b) and the lip segments 13 with the lip 11 come forward from out of the front side 5 of the bridge plate in the direction of the vehicle that is to be loaded and unloaded, the moment the lip cylinder 18 is operated.

With the operating of the lip segments cylinder 23 this will retract and pull the beam 21 backwards, in the direction of the loading platform. The lip segments 13 mounted to the beam 21 go along with this movement.

Onto the bottom side of the lip 11, shown in this example of an embodiment of the figures 5a, 5b and 5c, two mounting rails 26 and 27 are provided. Onto each mounting rail 26, 27 a locking element 28, 29 is provided. The locking elements 28, 29 protrude a length downwards from the bottom side of the lip 11, up to into the path of movement of the beam 21 mounted to the pair of lip segments 13.

In figure 5c it can be seen that with the operating and retracting of the lip segments cylinder 23 the beam 21, underneath the lip 11, is pulled backwards, in the direction of the loading platform, whereby the locking elements 28, 29 at some point prevent a further moving backwards of the beam 21 with the lip segments 13 mounted thereto.

The locking element 28, 29 is formed in such a way that this can be taken off and can be fastened again, such that this is positionable along the whole of the rail 26, 27. Thereby one can think of a locking element that is provided with a detachable fastening means, for instance in the form of a bolt or clamp or such like.

Also by means of this the size of the difference of the distances existing in the second position, in which the front edge 12 of the lip 11 finds itself from the front side 5 of the bridge plate 3 and that in which the front sides 14 of the lip segments 13 find themselves from the front side 5 of the bridge plate 3 can be adjusted in a simple manner, for instance by hand, by loosening and fastening at the desired location of the locking element 28, 29.

## Claims

1. Loading ramp for loading platforms, formed by a frame with a bridge plate which at its loading platform side rotatably is connected to the loading platform and at its front side is provided with a retractable and extendable supporting plate, that is intended to rest upon the loading floor of a vehicle, which supporting plate is formed by a lip with a front edge and two lip segments on both sides of the lip with each also a front edge, whereby the lip and the lip segments can be positioned, when the supporting plate is extended, in a first position, in which the front edge of the middle lip and the front edges of the lip segments find themselves at substantially a same distance relative to the front side of the bridge plate, and can be positioned in a second position, in which the front edge of the lip finds itself at a distance from the front side of the bridge plate that is greater than the distance at which the front edges of the lip segments find themselves from the front side of the bridge plate, **characterized in that** means are provided by which the size of the difference of the distances existing in the second position is adjustable.

2. Loading ramp according to claim 1, **characterized in that** the means are formed by at least one locking element, present in the path of movement of the lip segments, or **in that** of a part mounted on to a lip segment or to both lip segments, that is provided movably or detachably.

3. Loading ramp according to claim 2, **characterized in that** the locking element is mounted to the loading ramp onto a rail or mounting rail.

4. Loading ramp according to claim 2 or 3, **characterized in that** the locking element, or the rail with the locking element, is provided onto the lip.

5. Loading ramp according to claim 2, 3 or 4, **characterized in** the locking element, or the rail with the locking element, is provided onto the bottom side of the lip.

6. Loading ramp according to claim 2, 3, 4 or 5, **characterized in that** the locking element comprises a detachable connection means, for instance in the form of a bolt or clamp or such like.

7. Loading ramp according to claim 1, **characterized in that** the means are formed by a linear actuator that on the one side is provided onto the frame, the bridge plate or the lip and on the other side is provided onto the lip segments or onto a part mounted onto the lip segments and which is provided with an adjustable length of stroke.

8. Loading ramp according to claim 1 or 7, **characterized in that** the means are formed by an hydraulic cylinder, the housing of which is mounted onto the lip and the cylinder rod of which is provided onto the lip segments or onto a part mounted onto the lip segments, whereby the cylinder rod is provided with a part by means of which the length of stroke can be adjusted.

9. Loading ramp according to claim 1 or 7, **characterized in that** means are formed by an hydraulic cylinder, the cylinder housing of which is mounted onto the lip segments or onto a part mounted onto the lip segments lip and the cylinder rod of which is mounted onto the lip, whereby the cylinder rod is provided with a part by means of which the length of stroke can be adjusted.

10. Loading ramp according to claim 8 or 9, **characterized in that** the part is formed by an adjusting ring provided onto the cylinder rod.
